(19) Europäisches Patentamt
European Patent Office
Office européen des brevets

(11) EP 3 626 773 B1

# (12) EUROPEAN PATENT SPECIFICATION

(45) Date of publication and mention of the grant of the patent:
**08.12.2021 Bulletin 2021/49**

(21) Application number: **18801509.3**

(22) Date of filing: **25.04.2018**

(51) Int Cl.:
***C08L 9/00*** (2006.01)
***C08K 3/04*** (2006.01)
***C08L 7/00*** (2006.01)
***C08K 5/25*** (2006.01)
***C08K 5/20*** (2006.01)
***B60C 1/00*** (2006.01)
***C08K 3/36*** (2006.01)
***C08K 5/103*** (2006.01)
***C08K 5/42*** (2006.01)

(86) International application number:
**PCT/JP2018/016850**

(87) International publication number:
**WO 2018/211932 (22.11.2018 Gazette 2018/47)**

# (54) RUBBER COMPOSITION FOR TIRE, AND TIRE

KAUTSCHUKZUSAMMENSETZUNG FÜR REIFEN SOWIE REIFEN

COMPOSITION DE CAOUTCHOUC POUR PNEU ET PNEU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.05.2017 JP 2017096732**

(43) Date of publication of application:
**25.03.2020 Bulletin 2020/13**

(73) Proprietor: **Bridgestone Corporation**
**Tokyo 104-8340 (JP)**

(72) Inventors:
- **SAIKI Aya**
  **Tokyo 104-8340 (JP)**
- **HAMATANI Satoshi**
  **Tokyo 104-8340 (JP)**

(74) Representative: **Oxley, Robin John George**
**Marks & Clerk LLP**
**15 Fetter Lane**
**London EC4A 1BW (GB)**

(56) References cited:
**EP-A1- 2 439 237**
**EP-A1- 2 730 432**
**WO-A1-2014/098155**
**WO-A2-95/31888**
**JP-A- H0 598 074**
**JP-A- H08 283 461**
**JP-A- 2000 190 704**
**JP-A- 2000 190 704**
**JP-A- 2000 313 772**
**JP-A- 2001 213 112**
**JP-A- 2004 091 505**
**JP-A- 2005 523 967**
**JP-A- 2012 144 620**
**JP-A- 2012 219 230**
**JP-A- 2013 056 992**
**JP-A- 2013 155 212**
**JP-A- 2013 241 482**
**JP-A- 2013 245 306**
**JP-A- 2013 245 306**
**JP-A- 2014 095 015**
**JP-A- 2014 118 526**
**JP-A- 2014 221 863**
**JP-A- 2016 003 236**
**JP-A- 2016 003 236**
**JP-A- 2016 183 263**
**JP-A- 2017 048 351**
**US-A1- 2006 130 948**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

TECHNICAL FIELD

The present disclosure relates to a rubber composition for a tire, and a tire.

BACKGROUND

The demand for enhancement of the fuel efficiency of automobiles has recently become strong, and tires having a low rolling resistance are demanded. Hence, as rubber compositions for tires to be used for treads of the tires, rubber compositions low in tanδ and excellent in low heat generating property are desired.

In conventional pneumatic tires, for the purpose of materializing the low heat generating property, conceivable countermeasures include increasing the particle diameter of carbon black in rubber compositions and reducing the amount of carbon black compounded; however, a problem of bringing about a reduction of the abrasion resistance of tread rubbers arises simultaneously.

Hence, at present, the development of technologies is desired, which can improve abrasion resistance, as well as a low heat generating property.

As one of the technologies, for example, PTL 1 discloses, for the purpose of improving the chemical interaction of a rubber component with a carbon black, a rubber composition, in which the carbon black and a specific hydrazide compound are compounded in an elastomer containing a natural rubber.

CITATION LIST

Patent Literature

PTL 1: National Publication of International Patent Application No. 2014-501827

SUMMARY

(Technical Problem)

The technology disclosed in PTL 1, however, is not sufficient in the low heat generating property and needs further improvement, in consideration of the demand for enhancement of the fuel efficiency of automobiles. In addition to the improvement of the low heat generating property, further improvement in the abrasion resistance is desired.

Hence, an object of the present disclosure is to provide a rubber composition for a tire excellent in the low heat generating property and the abrasion resistance. Another object of the present disclosure is to provide a tire excellent in the low heat generating property and the abrasion resistance.

(Solution to Problem)

As a result of studies on a rubber composition for a tire (hereinafter, sometimes referred to simply as "rubber composition") comprising a rubber component and fillers to solve the above problems, the present inventors have noticed that although the interaction between the rubber component and a carbon black can be enhanced by incorporation of a specific carbon black dispersant such as a hydrazide compound having a specific structure in the rubber composition, when the specific carbon black dispersant such as the hydrazide compound is compounded in the rubber composition comprising the carbon black and a silica, a sufficient carbon black coupling effect is not achieved because the carbon black dispersant may sometimes be adsorbed on the silica surface. Then, exhaustive studies have further been carried out, and it has been found that by further compounding a compound having a specific Hansen solubility parameter in the rubber composition, the compound shields the silica to make adsorption of the carbon black dispersant by the silica to be suppressed, so that the coupling effect between the rubber component and the carbon black is highly efficiently attained and an excellent low heat generating property and abrasion resistance which cannot be achieved by conventional technologies can be achieved.

That is, the rubber composition for a tire according to the present disclosure is a rubber composition comprising a rubber component containing a diene rubber, a carbon black and a silica, wherein the rubber composition further comprises a carbon black dispersant which is at least one selected from the group consisting of compounds represented by the formulae (I) to (V), and salts, solvates and solvates of salts of compounds represented by the formula (IV); and a compound having a Hansen solubility parameter (HSP) of 27 or more.

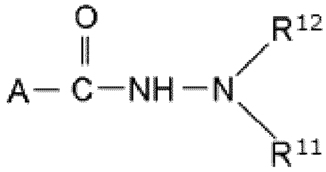

• • • (I)

wherein A is an aryl group, and the aryl group has at least one polar group, and when the aryl group has two or more polar groups, the polar groups may be the same or different; and $R^{11}$ and $R^{12}$ are each independently at least one substituent selected from the group consisting of a hydrogen atom, an acyl group, an amide group, an alkyl group, a cycloalkyl group and an aryl group, and the substituent may contain one or more of oxygen, sulfur and nitrogen atoms.

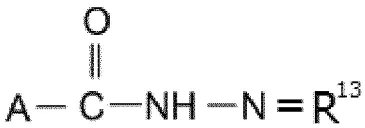

• • • (II)

wherein A is an aryl group, the aryl group has at least one polar group, and when the aryl group has two or more polar groups, the polar groups may be the same or different; and $R^{13}$ is a substituent composed of an alkylene group, a cycloalkylene group or an arylene group, and the substituent may contain one or more of oxygen, sulfur and nitrogen atoms.

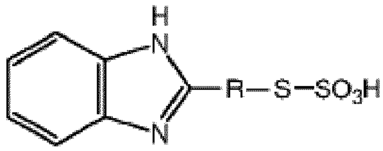

• • • (III)

wherein R denotes a linear or branched alkylene group having 1 to 6 carbon atoms.

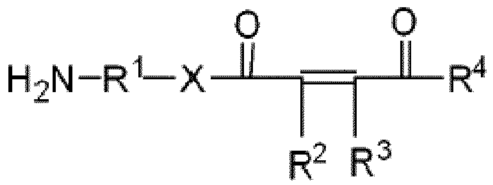

• • • (IV)

wherein $R^1$ denotes an alkanediyl group having 2 to 12 carbon atoms which may have a substituent, a cycloalkanediyl group having 3 to 12 carbon atoms which may have a substituent, or a $*$-$B^1$-Ar-$B^2$-$*$ group where * denotes a bond, $B^1$ and $B^2$ denote a single bond or an alkanediyl group having 1 to 12 carbon atoms, and Ar denotes a divalent aromatic hydrocarbon group having 6 to 12 carbon atoms which may have a substituent; $R^2$ and $R^3$ each independently denote a hydrogen atom, a halogen atom, an alkyl group having 1 to 6 carbon atoms, an aryl group having 6 to 12 carbon atoms, a hydroxy group or an alkoxy group having 1 to 6 carbon atoms, or are bonded to each other to form an alkanediyl group having 2 to 12 carbon atoms; $R^4$ denotes a hydroxy group, an alkoxy group having 1 to 6 carbon atoms, an aryloxy group having 6 to 12 carbon atoms, an arylalkoxy group having 7 to 15 carbon atoms, $-NR^5R^6$ where $R^5$ and $R^6$ each independently denote a hydrogen atom or an alkyl group having 1 to 6 carbon atoms, or $-O^-(Y^{n+})^{1/n}$; and X denotes -NH- or -O-.

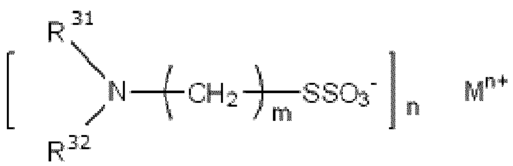

• • • (V)

wherein $M^{n+}$ denotes $H^+$ or an n-valent metal ion where n denotes an integer of 1 or 2; $R^{31}$ and $R^{32}$ each independently denote a hydrogen atom or an alkyl group having 1 to 6 carbon atoms, or are bonded to each other to form a ring with

the nitrogen atom to which these are bonded; and m denotes an integer of 2 to 9.

The rubber composition, by having the above constitution, can achieve an excellent low heat generating property and abrasion resistance.

Then, it is preferable that the rubber composition for a tire according to the present disclosure comprise the above carbon black dispersant in an amount of 0.05 to 30 parts by mass with respect to 100 parts by mass of the above rubber component. This is because a better low heat generating property and abrasion resistance can be achieved.

Further, it is preferable that the rubber composition for a tire according to the present disclosure comprise the compound having an HSP of 27 or more in an amount of 3 to 30% by mass with respect to the content of the silica. This is because a better low heat generating property and abrasion resistance can be achieved.

Further, for the rubber composition for a tire according to the present disclosure, it is preferable that the rubber component contain 60% by mass or more of a natural rubber, and it is more preferable that the following relational expression is satisfied:.

$$0.05 < b/(a + b) < 0.9$$

wherein a represents the content of the carbon black and b represents the content of the silica in the rubber composition.

This is because a better low heat generating property and abrasion resistance can be achieved.

Further, it is preferable that in the rubber composition for a tire according to the present disclosure, the compound having an HSP of 27 or more contain a fatty acid having 9 or more carbon atoms and at least one atom selected from nitrogen and oxygen. This is because a better low heat generating property and abrasion resistance can be achieved.

The tire according to the present disclosure is made using the above-mentioned rubber composition for a tire according to the present disclosure.

The tire, by having the above constitution, can achieve an excellent low heat generating property and abrasion resistance.

(Advantageous Effect)

According to the present disclosure, a rubber composition for a tire excellent in the low heat generating property and the abrasion resistance can be provided. According to the present disclosure, a tire excellent in the low heat generating property and the abrasion resistance can further be provided.

DETAILED DESCRIPTION

Hereinafter, embodiments according to the present disclosure will be illustrated and explained specifically.

<Rubber composition for a tire>

The rubber composition for a tire according to the present disclosure is a rubber composition comprising a rubber component, a carbon black and a silica.

(Rubber component)

The rubber component contained in the rubber composition for a tire according to the present disclosure is a rubber component containing a diene rubber; and as the diene rubber, natural rubber and optional synthetic rubber can be used.

Here, in the rubber component, the diene rubber is preferably a main component; and specifically, preferably accounts for 60% by mass or more and more preferably accounts for 80% by mass or more.

Examples of the diene rubber include natural rubber, polyisoprene rubber (IR), styrene·butadiene copolymer rubber (SBR) and polybutadiene rubber (BR), but among these, it is preferable to use natural rubber. This is because a better low heat generating property and abrasion resistance can be achieved. Here, the diene rubber may be contained singly or may be contained as a blend of two or more.

When the rubber component contains natural rubber, the content of the natural rubber is preferably 60% by mass or more, more preferably 70% by mass or more and particularly preferably 80% by mass or more. This is because a better low heat generating property and abrasion resistance can be achieved.

(Carbon black)

The rubber composition for a tire according to the present disclosure comprises, in addition to the above-mentioned rubber component, further a carbon black.

Here, the kind and the content of the carbon black are not particularly limited, and can be selected suitably according to the required performance.

The kind of the carbon black includes carbon blacks of GPF, FEF, SRF, HAF, ISAF, IISAF, SAF and other grades; and any one thereof may be used singly or a blend of a plurality of kinds thereof may be used. From the viewpoint that a better low heat generating property and abrasion resistance can be achieved, it is preferable to use at least one of hard carbon blacks included in the range of HAF to SAF.

The content of the carbon black is, from the viewpoint that a better low heat generating property and abrasion resistance can be achieved, with respect to 100 parts by mass of the rubber component, preferably 10 to 160 parts by mass, more preferably 30 to 80 parts by mass and particularly preferably 30 to 60 parts by mass. By making the content of the carbon black to be 10 parts by mass or more with respect to the rubber component, a sufficient abrasion resistance can be attained; and on the other hand, by making the content of the carbon black to be 160 parts by mass or less with respect to the rubber component, a sufficient low heat generating property and processability can be secured.

(Silica)

The rubber composition for a tire according to the present disclosure comprises, in addition to the above-mentioned rubber component and carbon black, further a silica.

Here, the kind and the content of the silica are not particularly limited, and can be selected suitably according to the required performance.

Examples of the kind of the silica include wet silica, dry silica and colloidal silica; and any one thereof may be used singly or a blend of a plurality of kinds thereof may be used.

Here, the content of the silica is, from the viewpoint that a better low heat generating property and abrasion resistance can be achieved, with respect to 100 parts by mass of the rubber component, preferably 1 to 90 parts by mass and more preferably 3 to 70 parts by mass. By making the content of the silica to be 3 parts by mass or more with respect to the rubber component, a sufficient low heat generating property can be attained; and on the other hand, by making the content of the silica to be 60 parts by mass or less with respect to the rubber component, a sufficient low heat generating property and processability can be secured.

Then with regard to the carbon black and the silica, from the viewpoint that a better low heat generating property and abrasion resistance can be achieved, it is more preferable that the following relational expression be satisfied:

$$0.05 < b/(a + b) < 0.9;$$

and

it is particularly preferable that the following relational expression be satisfied:

$$0.1 < b/(a + b) < 0.7,$$

where a represents the content of the carbon black and b represents the content of the silica. Here, either of the contents a and b means a mass (or a proportion of the mass) contained in the rubber composition.

(Carbon black dispersant)

The rubber composition for a tire according to the present disclosure comprises the above-mentioned rubber component and a carbon black dispersant which is at least one selected from the group consisting of compounds represented by the formulae (I) to (V), and salts, solvates and solvates of salts of compounds represented by the formula (IV).

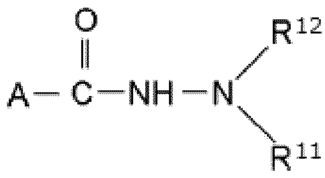 · · · (I)

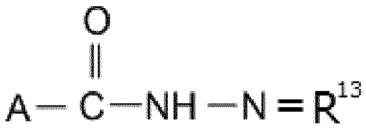 · · · (II)

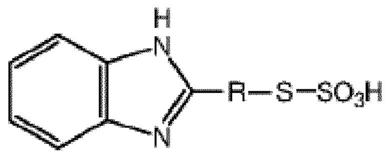 · · · (III)

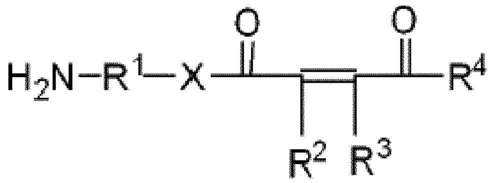 · · · (IV)

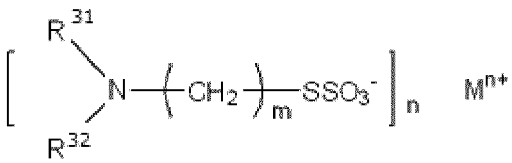 · · · (V)

By incorporating these carbon black dispersants, the coupling effect between the rubber component and the carbon black is highly efficiently attained, and the dispersibility of the carbon black in the rubber composition can be enhanced. The rubber composition in which the dispersibility of the carbon black is enhanced is enabled to achieve an excellent low heat generating property and abrasion resistance.

Here, the content of the carbon black dispersant is not particularly limited, but is, from the viewpoint that a better low heat generating property and abrasion resistance are attained, with respect to 100 parts by mass of the rubber component, preferably 0.05 to 30 parts by mass, more preferably 0.05 to 20 parts by mass, still more preferably 0.05 to 10 parts by mass and particularly preferably 0.05 to 5 parts by mass. When the content of the carbon black dispersant is 0.05 part by mass or more with respect to 100 parts by mass of the rubber component, since a sufficient dispersive effect of the carbon black is attained, a better low heat generating property and abrasion resistance can be achieved; and on the other hand, when the content of the carbon black dispersant is 30 parts by mass or less with respect to 100 parts by mass of the rubber component, other physical properties such as strength are never reduced.

. Compounds represented by the formula (I)

Compounds constituting the carbon black dispersant include compounds represented by the formula (I).

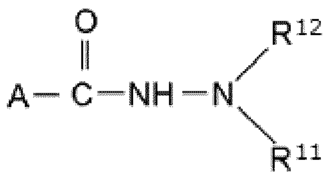 · · · (I)

A in the formula (I) is an aryl group. Here, the aryl group has at least one polar group on any position, and when

the aryl group has two or more polar groups, the polar groups may be the same or different.

$R^{11}$ and $R^{12}$ in the formula (I) are each independently at least one substituent selected from the group consisting of a hydrogen atom, an acyl group, an amide group, an alkyl group, a cycloalkyl group and an aryl group. Further, these substituents may contain one or more of oxygen, sulfur and nitrogen atoms.

The compounds represented by the formula (I), since the aryl group represented as A has high affinity for fillers such as carbon black and a moiety having a hydrazide skeleton has high affinity for the rubber component, by being compounded in the rubber composition, can largely improve the chemical interaction between the rubber component and the fillers such as carbon black. Thereby, the hysteresis caused by the fillers rubbing against one another can be reduced, so that a much better low heat generating property than conventionally can be attained. Additionally, by the improvement of the dispersibility of the fillers, a better reinforcing property can also be attained.

As a result of the large improvement of the chemical interaction between the rubber component and the fillers, while the low heat generating property of the rubber composition is retained, the scorching property is improved (the scorching time is protracted), and thereby the processability is also enabled to be improved.

Here, the aryl group represented as A in the compounds represented by the formula (I) includes aromatic hydrocarbon groups such as a phenyl group, a naphthyl group, an anthryl group, a phenanthryl group and a triphenylenyl group. Among these, the aryl group is preferably a phenyl group or a naphthyl group, and more preferably a phenyl group. Since these aryl groups exhibit excellent affinity for fillers, a better low heat generating property can be achieved, and since the number of aromatic rings can be reduced, use of these is advantageous in cost and excellent also in practical use.

Then, it is preferable that the number of polar groups which the aryl group represented as A in the compounds represented by the formula (I) has be two or more. This is because by making the aromatic ring of the aryl group to have two or more polar groups, a high affinity for fillers such as carbon black can be attained.

Then the kind of the polar groups are not particularly limited, and examples thereof include an amino group, an imino group, a nitrile group, an ammonium group, an imide group, an amide group, a hydrazo group, an azo group, a diazo group, a hydroxy group, a carboxy group, a carbonyl group, an epoxy group, an oxycarbonyl group, nitrogen-containing heterocyclic groups, oxygen-containing heterocyclic groups, tin-containing groups, alkoxysilyl groups, alkylamino groups and a nitro group. Among these, it is preferable that at least one of the polar groups be a hydroxy group, an amino group or a nitro group, and it is more preferable that the at least one be a hydroxy group; and it is particularly preferable that at least two thereof be hydroxy groups. This is because a better affinity for fillers is exhibited, and the low heat generating property is more improved.

Then with regard to the hydrazide group connected to A in the compounds represented by the formula (I), $R^{11}$ and $R^{12}$ are each independently at least one substituent selected from the group consisting of a hydrogen atom, an acyl group, an amide group, an alkyl group, a cycloalkyl group and an aryl group, and these substituents may be ones containing one or more of oxygen, sulfur and nitrogen atoms.

Further, $R^{11}$ and $R^{12}$ are, among the above-mentioned substituents, each independently preferably a hydrogen atom or an alkyl group and more preferably, either thereof is a hydrogen atom. This is because these have a high affinity for the rubber component and a better low heat generating property and processability can be attained.

Here, examples of the above-mentioned compounds represented by the formula (I) include hydrazide 3-hydroxy-2-naphthoate, 2,3-dihydroxybenzohydrazide, 2,4-dihydroxybenzohydrazide, 2,5-dihydroxybenzohydrazide and 2,6-dihydroxybenzohydrazide.

Then, the molecular weight of the compounds represented by the formula (I) is preferably 200 or less and more preferably 180 or less. This is because the compounds become high in the affinity for each molecule of the diene rubber, a better low heat generating property can be attained, and the abrasion resistance can also be enhanced.

Then, the melting point of the compounds represented by the formula (I) is 80°C or more and less than 250°C and more preferably 80 to 200°C. This is because by making the melting point of the hydrazide compounds low, the affinity for each molecule of the diene rubber becomes high, a better low heat generating property can be attained, and the abrasion resistance can also be enhanced.

• Compounds represented by the formula (II)

Compounds constituting the carbon black dispersant include compounds represented by the formula (II).

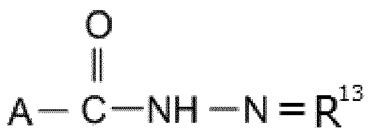 · · · (II)

A in the formula (II) is an aryl group, the aryl group has at least one polar group, and when the aryl group has two or more polar groups, the polar groups may be the same or different.

Then, $R^{13}$ in the formula (II) is a substituent composed of an alkylene group, a cycloalkylene group or an arylene group, and these substituents may contain one or more of oxygen, sulfur and nitrogen atoms.

The compounds represented by the formula (II), since the aromatic ring having a polar group represented as A has high affinity for fillers such as carbon black and a moiety having a hydrazone skeleton has high affinity for the rubber component, by being compounded in the rubber composition, can largely improve the chemical interaction between the rubber component and the fillers. Thereby, the hysteresis caused by the fillers rubbing against one another can be reduced, so that a much better low heat generating property than conventionally can be attained. Additionally, by the improvement of the dispersibility of the fillers, a better reinforcing property can also be attained.

Then, as a result of the improvement of the chemical interaction between the rubber component and the fillers, since while the low heat generating property of the rubber composition is retained, the scorching property is improved (the scorching time is protracted), the processability is also enabled to be improved.

Here, the number of the polar groups which the aromatic ring represented as A in the compounds represented by the formula (II) has is two or more and preferably three or more. This is because by making the aromatic ring to have two or more polar groups, a high affinity for fillers such as carbon black can be attained; and in the case of being less than two, the affinity for the fillers cannot be attained sufficiently and a risk of reducing the low heat generating property of the rubber composition arises.

Then the kind of the polar groups are not particularly limited, and examples thereof include an amino group, an imino group, a nitrile group, an ammonium group, an imide group, an amide group, a hydrazo group, an azo group, a diazo group, a hydroxy group, a carboxy group, a carbonyl group, an epoxy group, an oxycarbonyl group, nitrogen-containing heterocyclic groups, oxygen-containing heterocyclic groups, tin-containing groups, alkoxysilyl groups, alkylamino groups and a nitro group. Among these, it is preferable that the polar group contain a hydroxy group or an amino group; and it is more preferable that the polar group contain a hydroxy group. This is because a better affinity for fillers is exhibited, and the low heat generating property of the rubber composition is more improved.

Then the number of the aromatic ring represented as A in the compounds represented by the formula (II) is preferably two or more; and more preferably three or more. Since an excellent affinity for fillers is exhibited, a better low heat generating property can be achieved.

Then with regard to the hydrazone group connected to A in the compounds represented by the formula (II), $R^{13}$ becomes a functional group composed of an alkylene group having 1 to 10 carbon atoms, a cycloalkylene group or an arylene group. Here, these functional groups may be ones containing one or more of oxygen, sulfur and nitrogen atoms.

Here, examples of the above-mentioned compounds represented by the formula (II) include hydrazide 3-hydroxy-N'-(1,3-dimethylbutylidene)-2-naphthoate, 2,3-dihydroxy-N'-(4-methylpentan-2-ylidene)benzohydrazide, 2,4-dihydroxy-N'-(4-methylpentan-2-ylidene)benzohydrazide, 2,5-dihydroxy-N'-(4-methylpentan-2-ylidene)benzohydrazide and 2,6-dihydroxy-N'-(4-methylpentan-2-ylidene)benzohydrazide

• Compounds represented by the formula (III)

Compounds constituting the carbon black dispersant include compounds represented by the formula (III) (benzimidazolylalkylthiosulfuric acids).

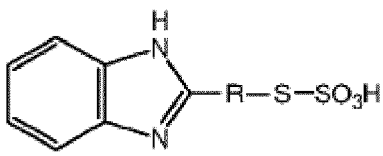

• • • (III)

wherein R denotes a linear or branched alkylene group having 1 to 6 carbon atoms.

The benzimidazolylalkylthiosulfuric acids have a feature in the point of having a structure in which an alkyl group having a thiosulfuric acid group is substituted on the 2-position of benzimidazole.

Examples of the benzimidazolylalkylthiosulfuric acids include

S-((benzimidazolyl-2)methyl)thiosulfuric acid,
S-(2-(benzimidazolyl-2)ethyl)thiosulfuric acid,
S-(3-(benzimidazolyl-2)n-propyl)thiosulfuric acid,
S-(2-(benzimidazolyl-2)isopropyl)thiosulfuric acid,
S-(4-(benzimidazolyl-2)n-butyl)thiosulfuric acid,
S-(5-(benzimidazolyl-2)n-pentyl)thiosulfuric acid and

S-(6-(benzimidazolyl-2)n-hexyl)thiosulfuric acid.

Here, these benzimidazolylalkylthiosulfuric acids may be used singly or in combinations of two or more as components of the carbon black dispersant.
The benzimidazolylalkylthiosulfuric acids can be synthesized by a known method. These can be synthesized, for example, by reacting a thiosulfuric acid metal salt of an alkylcarboxylic acid (hereinafter, referred to as precursor) with o-phenylenediamine in water in the presence of hydrochloric acid.
It is preferable that the reaction temperature of the precursor with o-phenylenediamine be set at 80 to 120°C; and the reaction time thereof is suitably determined according to the set reaction temperature, but preferably is in the range of 2 to 24 hours.
This reaction forms hydrochlorides of benzimidazolylalkylthiosulfuric acids. Then, by neutralizing the hydrochlorides with a caustic soda solution, benzimidazolylalkylthiosulfuric acids are formed.
The benzimidazolylalkylthiosulfuric acids can be isolated and purified by after the neutralization, concentrating the reaction liquid to dryness and thereafter extracting them with a suitable solvent. The solvent to be used for the extraction includes methanol, ethanol and 2-propanol.
The precursor is obtained by reacting a haloalkylcarboxylic acid with a metal salt of thiosulfuric acid in a suitable solvent such as water.
The reaction temperature and the reaction time for synthesizing the precursor are not particularly limited, but the reaction temperature is preferably 0 to 90°C and more preferably 40 to 80°C. The reaction time is preferably 1 to 12 hours and more preferably 2 to 8 hours. The solvent to be used for the reaction includes water, methanol, ethanol, 2-propanol, acetonitrile, dimethoxyethane, tetrahydrofuran and dioxane. These solvents can be used singly or in combinations of two or more.
Examples of the haloalkylcarboxylic acid include monochloroacetic acid, 2-chloropropionic acid, 3-chloropropionic acid, 3-chlorobutanoic acid, 4-chlorobutanoic acid, 5-chloropentanoic acid, 6-chlorohexanoic acid, monobromo acetic acid and 3-bromopropionic acid.
Examples of the metal salt of thiosulfuric acid include lithium thiosulfate, sodium thiosulfate, potassium thiosulfate, magnesium thiosulfate, cerium thiosulfate, cobalt thiosulfate, copper thiosulfate and zinc thiosulfate.

• Compounds represented by the formula (IV)

Compounds constituting the carbon black dispersant include compounds represented by the formula (IV) (hereinafter, referred to also as compounds (IV)), salts of the compounds represented by the formula (IV), solvates of the compounds represented by the formula (IV), and solvates of salts of the compounds represented by the formula (IV).

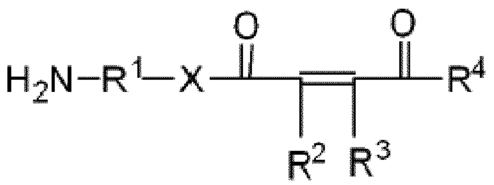

· · · (IV)

wherein $R^1$ denotes an alkanediyl group having 2 to 12 carbon atoms which may have a substituent, a cycloalkanediyl group having 3 to 12 carbon atoms which may have a substituent, or a $*-B^1-Ar-B^2-*$ group where $*$ denotes a bond, $B^1$ denotes a single bond or an alkanediyl group having 1 to 12 carbon atoms, and $B^2$ denotes a single bond or an alkanediyl group having 1 to 12 carbon atoms. Ar denotes an optionally substituted divalent aromatic hydrocarbon group having 6 to 12 carbon atoms; $R^2$ and $R^3$ each independently denote a hydrogen atom, a halogen atom, an alkyl group having 1 to 6 carbon atoms, n aryl group having 6 to 12 carbon atoms, a hydroxy group or an alkoxy group having 1 to 6 carbon atoms, or are bonded to each other to form an alkanediyl group having 2 to 12 carbon atoms; $R^4$ denotes a hydroxy group, an alkoxy group having 1 to 6 carbon atoms, an aryloxy group having 6 to 12 carbon atoms, an arylalkoxy group having 7 to 15 carbon atoms, $-NR^5R^6$ where $R^5$ and $R^6$ each independently denote a hydrogen atom or an alkyl group having 1 to 6 carbon atoms, or $-O^-(Y^{n+})^{1/n}$; and X denotes -NH- or -O-.
The salts of the compounds (IV) include carboxylate salts of the compounds (IV) in which $R^4$ is a hydroxy group, and addition salts formed by combination of an amine moiety ($-NH_2$ or -NH-) in the compounds (IV) with an acid.
Examples of the carboxylate salts of the compounds (IV) include salts in which $R^4$ is $-O^-(Y^{n+})^{1/n}$ in the compounds represented by the formula (IV) or salts thereof.
The acid in the addition salts formed by combination of an amine moiety in the compounds (IV) with the acid includes inorganic acids and organic acids.
The solvates of the compounds (IV) include methanol solvates and hydrates.

With regard to the carbon-carbon double bond and the bond between $R^3$ and $CO\text{-}R^4$ in the compounds (IV), the compounds (IV) may be any of compounds in which the configuration of the carbon-carbon double bond is an E form, compounds in which the configuration is a Z form, and mixtures of the compounds in the E form and the Z form. Among these, preferable are the compounds in which the configuration of the carbon-carbon double bond is the Z form.

Further, as the compounds (IV), compounds represented by the formula (IV-I) are preferable.

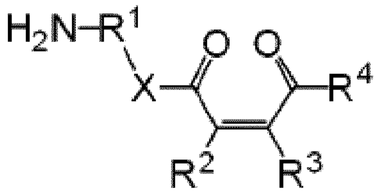 · · · (IV-I)

wherein $R^1$, $R^2$, $R^3$, $R^4$ and X denote the same meanings as in the above.

Examples of the alkanediyl group having 2 to 12 carbon atoms in $R^1$ include linear alkanediyl groups such as a methylene group, an ethylene group, a trimethylene group, a tetramethylene group, a pentamethylene group and a hexamethylene group; branched alkanediyl groups such as an isopropylene group, an isobutylene group, a 2-methyltrimethylene group, an isopentylene group, an isohexylene group, an isooctylene group, a 2-ethylhexylene group and an isodecylene group; and the like. Among these, the number of carbon atoms of the alkanediyl groups is preferably 3 to 12 and more preferably 3 to 6. Further the linear alkanediyl groups are preferable.

Examples of substituents which the alkanediyl group may have include alkoxy groups having 1 to 4 carbon atoms, such as a methoxy group, an ethoxy group and a butoxy group; halogen atoms such as chlorine, bromine, iodine and fluorine; aryl groups having 6 to 12 carbon atoms, such as a phenyl group, a naphthyl group and a biphenyl group; and a hydroxy group. Examples of the alkanediyl groups having a substituent include the following groups. Here, * in the formula denotes a bond.

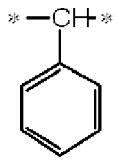 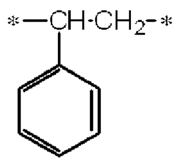 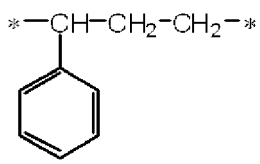 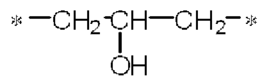 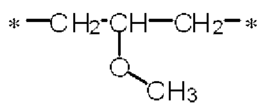

Examples of the cycloalkanediyl group having 3 to 12 carbon atoms in $R^1$ include a cyclopropylene group, a cyclopentylene group, a cyclohexylene group and a cyclodecylene group.

Examples of substituents which the cycloalkanediyl group having 3 to 12 carbon atoms may have include alkyl groups having 1 to 4 carbon atoms, such as a methyl group, an ethyl group, an n-propyl group, an n-butyl group and a t-butyl group; aryl groups having 6 to 10 carbon atoms, such as a phenyl group, a 4-methylphenyl group and a naphthyl group; alkoxy groups having 1 to 4 carbon atoms, such as a methoxy group, an ethoxy group and an n-butoxy group; acyl groups having 1 to 7 carbon atoms, such as an acetyl group, a benzoyl group, a formyl group and a pivaloyl group; alkoxycarbonyl groups having 3 or 4 carbon atoms, such as a methoxycarbonyl group and an ethoxycarbonyl group; aryloxycarbonyl groups having 7 to 11 carbon atoms, such as a phenoxycarbonyl group and a naphthyloxycarbonyl group; acyloxy groups having 2 to 7 carbon atoms, such as an acetoxy group and a benzoyloxy group; and the like.

As the cycloalkanediyl group having 3 to 12 carbon atoms, preferable are a cyclopentylene group, a cyclohexylene group, a methylcyclohexylene group and a t-butylcyclohexylene group.

The alkanediyl group having 1 to 12 carbon atoms in B1 and B2 includes those listed as the alkanediyl groups having 3 to 12 carbon atoms in the above, and a methylene group.

The divalent aromatic hydrocarbon group having 6 to 12 carbon atoms in Ar includes a phenylene group, a naphthylene group and a biphenylene group.

Examples of the *-B1-Ar-B2-* group in R1 include a phenylene group, a naphthylene group, a biphenylene group and the following group. Here, * in the formula denotes a bond.

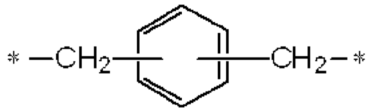

The hydrogen atom(s) contained in Ar may be substituted by one or more groups selected from the group consisting of alkyl groups having 1 to 4 carbon atoms, alkoxy groups having 1 to 4 carbon atoms, a hydroxy group, a nitro group, a cyano group, a sulfo group and halogen atoms.

As R1, preferable is an alkylene group having 2 to 12 carbon atoms, a phenylene group or the following group; and more preferable is a phenylene group.

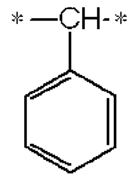

The halogen atoms in $R^2$ and $R^3$ include fluorine, chlorine, bromine and iodine.

Examples of the alkyl group having 1 to 6 carbon atoms in $R^2$ and $R^3$ include a methyl group, an ethyl group, an n-propyl group, an isopropyl group, an n-butyl group, an isobutyl group, a sec-butyl group, a tert-butyl group, an n-pentyl group, an isopentyl group and an n-hexyl group.

The aryl group having 6 to 12 carbon atoms in $R^2$ and $R^3$ indicates a monocyclic or condensed polycyclic aromatic hydrocarbon having 6 to 12 carbon atoms, and examples thereof include a phenyl group, a naphthyl group and a biphenyl group.

Examples of the alkoxy group having 1 to 6 carbon atoms in $R^2$ and $R^3$ include a methoxy group, an ethoxy group, an n-propoxy group, an isopropoxy group, an n-butoxy group, an isobutoxy group, a sec-butoxy group, a tert-butoxy group, an n-pentoxy group, an isopentoxy group and an n-hexyloxy group.

The alkanediyl group having 2 to 12 carbon atoms formed by mutual bonding of $R^2$ and $R^3$ include the same groups as the alkanediyl groups having 3 to 12 carbon atoms listed in the above, and preferable is an alkanediyl group having 3 or 4 carbon atoms. Examples of a cyclic structure formed by mutually bonded $R^2$ and $R^3$ and the carbon atoms to which $R^2$ and $R^3$ are bonded include a cyclopentene ring and a cyclohexene ring.

As $R^2$ and $R^3$, it is preferable that $R^2$ be a hydrogen atom and $R^3$ be a hydrogen atom or an alkyl group having 1 to 6 carbon atoms, and it is more preferable that $R^2$ and $R^3$ be hydrogen atoms.

The alkoxy group having 1 to 6 carbon atoms in $R^4$ includes the same groups as the alkyl groups having 1 to 6 carbon atoms in $R^2$ and $R^3$ in the above.

The aryloxy group having 6 to 12 carbon atoms in $R^4$ includes groups in which an oxy group is bonded to the aryl group having 6 to 12 carbon atoms in $R^2$ and $R^3$ in the above, and examples thereof include a phenyloxy group, a naphthyloxy group and a biphenyloxy group.

The arylalkoxy group having 7 to 15 carbon atoms in $R^4$ includes a phenylethyloxy group, a benzyloxy group and a phenylpropyloxy group.

The $-NR^5R^6$ in $R^4$ includes a methylamino group, an ethylamino group, a phenylamino group, an ethylmethylamino group, a dimethylamino group, a diethylamino group, a methylphenylamino group, an ethylphenylamino group and a diphenylamino group.

$Y^{n+}$ in $R^4$ denotes an n-valent cation capable of forming carboxylate salts of the compounds represented by the formula (IV).

$Y^+$ includes cations of metals selected from the groups consisting of alkali metals, alkaline earth metals, and transition elements of IB and IIB groups of Periodic Table, and cations of organic bases capable of forming salts with a carboxyl group, such as amines, and examples thereof include $Li^+$, $Na^+$, $K^+$, $Mg^{2+}$, $Ca^{2+}$, $Ba^{2+}$, $Zn^{2+}$, $Cu^{2+}$, $Cu^+$, $Ag^+$, $(NH_4)^+$, $[NH(C_2H_5)_3]^+$, $[NH(C_2H_5)(i\text{-}C_3H_7)_2]^+$, $^+H_3N\text{-}(CH_2)_2\text{-}NH_3^+$ and $^+H_3N\text{-}(CH_2)_6\text{-}NH_3^+$.

$R^4$ is preferably a hydroxy group or $-O^-(Y^{n+})^{1/n}$, and more preferably a hydroxy group or $-O^-(Y^{n+})^{1/n}$ (Y is an alkali metal).

Specific examples of the compounds (IV) are presented in the below.

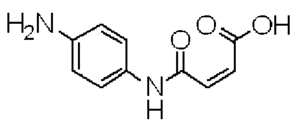

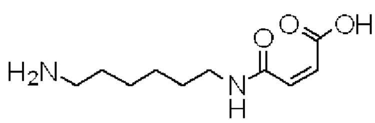

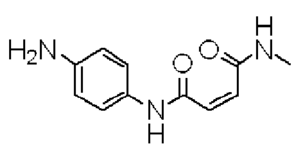

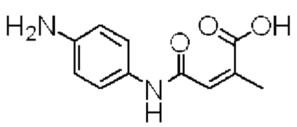 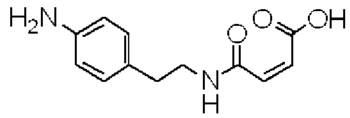 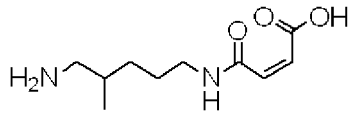

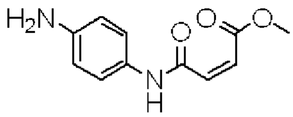 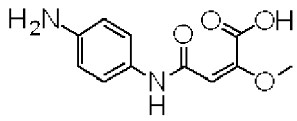 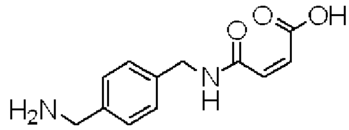

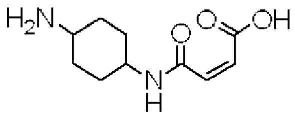 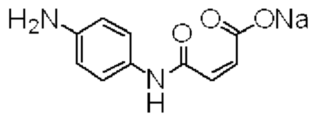 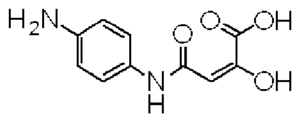

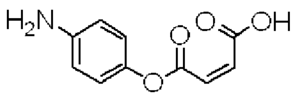 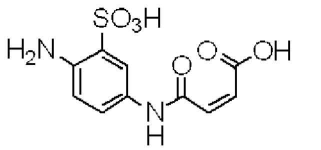 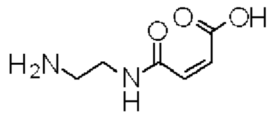

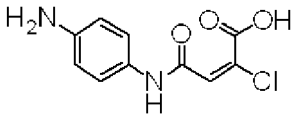

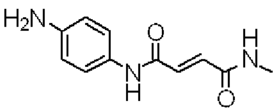 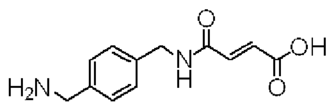 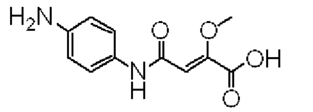

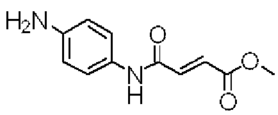 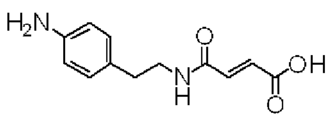 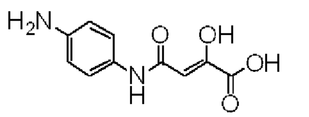

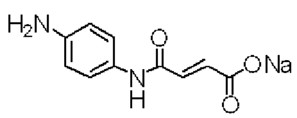 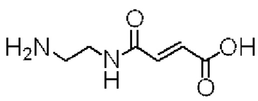 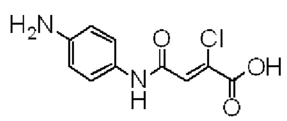

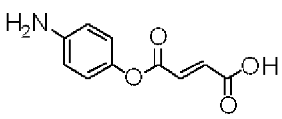 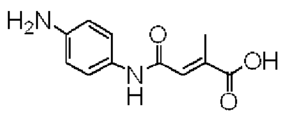 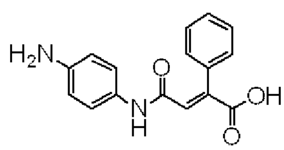

Then, the compounds (IV) can be produced, for example, by carrying out reactions indicated by the formula (a), the formula (b) and the formula (c).

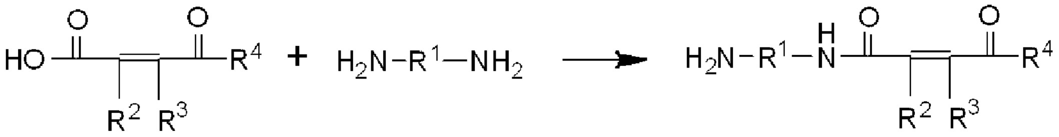
(a)

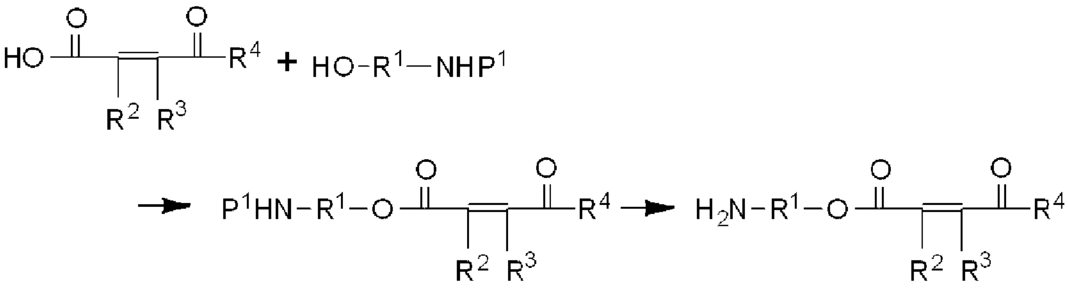
(b)

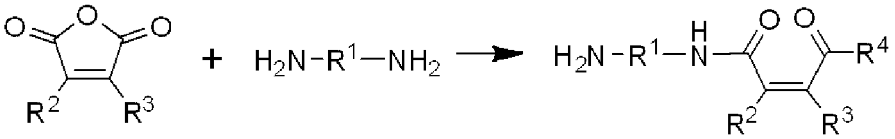
(c)

wherein in the formula (a), the formula (b) and the formula (c), $R^1$, $R^2$, $R^3$ and $R^4$ denote the same meanings as in the above; and $P^1$ denotes a protecting group.

The protecting group represented by $P^1$ includes a tert-butoxycarbonyl group. When a protecting group is used, the protecting group can be removed by a widely used method.

The compounds represented by the formula (IV-I) can be produced by subjecting a corresponding acid anhydride such as maleic anhydride to esterification reaction, amidation reaction or salt-forming reaction.

Compounds represented by the formula (V)

Compounds constituting the carbon black dispersant include compounds represented by the formula (V) (hereinafter, referred to also as "compounds (V)").

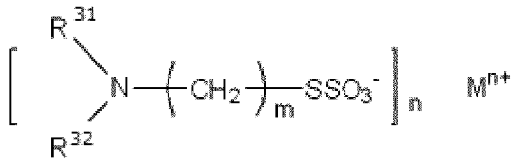
· · · (V)

wherein $M^{n+}$ denotes $H^+$ or an n-valent metal ion, where n denotes an integer of 1 or 2; $R^{31}$ and $R^{32}$ each independently denote a hydrogen atom or an alkyl group having 1 to 6 carbon atoms, or are bonded to each other to form a ring with the nitrogen atom to which these are bonded; and m denotes an integer of 2 to 9.

The alkyl group having 1 to 6 carbon atoms in $R^{31}$ and $R^{32}$ includes a methyl group, an ethyl group, an n-propyl group, an isopropyl group, an n-butyl group, an isobutyl group, a sec-butyl group, a tert-butyl group, a heptyl group and a hexyl group.

When $R^{31}$ and $R^{32}$ are bonded to each other and form a ring with the nitrogen atom to which these are bonded, groups formed by the mutual bonding of $R^{31}$ and $R^{32}$ include polymethylene groups; and the polymethylene groups include an ethylene group (dimethylene group), a trimethylene group, a tetramethylene group, a pentamethylene group and a hexamethylene group. $R^{31}$ and $R^{32}$ are preferably hydrogen atoms.

$M^{n+}$ includes $H^+$, a lithium ion, a sodium ion, a potassium ion, a cesium ion, a magnesium ion, a calcium ion, a strontium ion, a barium ion, a manganese ion, an iron ion, a copper ion and a zinc ion; preferable is $H^+$ or an alkali metal ion, and more preferable is $H^+$ or a sodium ion.

Examples of the compounds represented by the formula (V) include S-(aminoalkyl)thiosulfuric acids, S-(aminoalkyl)thiosulfuric acid salts,

S-(N,N-dialkylaminoalkyl)thiosulfuric acids,
S-(N,N-dialkylaminoalkyl)thiosulfuric acid salts,
S-(N-monoalkylaminoalkyl)thiosulfuric acids and
S-(N-monoalkylaminoalkyl)thiosulfuric acid salts; and preferable is an
S-(aminoalkyl)thiosulfuric acid or an S-(aminoalkyl)thiosulfuric acid salt.

Here, the S-(aminoalkyl)thiosulfuric acids include

S-(aminoethyl)thiosulfuric acid, S-(aminopropyl)thiosulfuric acid,
S-(aminobutyl)thiosulfuric acid, S-(aminopentyl)thiosulfuric acid,
S-(aminohexyl)thiosulfuric acid, S-(aminoheptyl)thiosulfuric acid,
S-(aminooctyl)thiosulfuric acid and S-(aminononyl)thiosulfuric acid.

The S-(aminoalkyl)thiosulfuric acid salts include sodium

S-(aminoethyl)thiosulfate, sodium S-(aminopropyl)thiosulfate, sodium
S-(aminobutyl)thiosulfate, sodium S-(aminopentyl)thiosulfate, sodium
S-(aminohexyl)thiosulfate, sodium S-(aminoheptyl)thiosulfate, sodium
S-(aminooctyl)thiosulfate and sodium S-(aminononyl)thiosulfate.

The S-(N,N-dialkylaminoalkyl)thiosulfuric acids include S-(N,N-dimethylaminoethyl)thiosulfuric acid,

S-(N,N-dimethylaminopropyl)thiosulfuric acid,
S-(N,N-dimethylaminobutyl)thiosulfuric acid,
S-(N,N-dimethylaminopentyl)thiosulfuric acid,
S-(N,N-dimethylaminohexyl)thiosulfuric acid,
S-(N,N-dimethylaminoheptyl)thiosulfuric acid,
S-(N,N-dimethylaminooctyl)thiosulfuric acid and
S-(N,N-dimethylaminononyl)thiosulfuric acid.

The S-(N,N-dialkylaminoalkyl)thiosulfuric acid salts include sodium

S-(N,N-dimethylaminoethyl)thiosulfate, sodium
S-(N,N-dimethylaminopropyl)thiosulfate, sodium
S-(N,N-dimethylaminobutyl)thiosulfate, sodium
S-(N,N-dimethylaminopentyl)thiosulfate, sodium
S-(N,N-dimethylaminohexyl)thiosulfate, sodium
S-(N,N-dimethylaminoheptyl)thiosulfate, sodium
S-(N,N-dimethylaminooctyl)thiosulfate and sodium
S-(N,N-dimethylaminononyl)thiosulfate.

The S-(N-monoalkylaminoalkyl)thiosulfuric acids include

S-(N-methylaminoethyl)thiosulfuric acid,
S-(N-methylaminopropyl)thiosulfuric acid,
S-(N-methylaminobutyl)thiosulfuric acid,
S-(N-methylaminopentyl)thiosulfuric acid,
S-(N-methylaminhexyl)thiosulfuric acid,
S-(N-methylaminoheptyl)thiosulfuric acid,
S-(N-methylaminooctyl)thiosulfuric acid and
S-(N-methylaminononyl)thiosulfuric acid.

The S-(N-monoalkylaminoalkyl)thiosulfuric acid salts include sodium

S-(N-methylaminoethyl)thiosulfate, sodium
S-(N-methylaminopropyl)thiosulfate, sodium
S-(N-methylaminobutyl)thiosulfate, sodium
S-(N-methylaminopentyl)thiosulfate, sodium

S-(N-methylaminohexyl)thiosulfate, sodium
S-(N-methylaminoheptyl)thiosulfate, sodium
S-(N-methylaminooctyl)thiosulfate and sodium
S-(N-methylaminononyl)thiosulfate.

The compounds (V) can be produced, for example, by reacting a 3-chloropropylamine hydrochloride with sodium thiosulfate. The compounds (V) may be obtained by neutralizing metal salts of the compounds (V), for example, with a protonic acid such as hydrochloric acid or sulfuric acid. The metal salts of the compounds (V) can be produced by an optional known method, for example, a method of reacting a 3-halopropylamine with sodium thiosulfate or a method of reacting a phthalimide potassium salt with a 1,3-dihalopropane, then reacting the obtained compound with sodium thiosulfate, and then hydrolyzing the obtained compound.
Although any of the above-mentioned compounds represented by the formulae (I) to (IV) can attain the effect of enhancing the dispersibility of the carbon black, in the present disclosure, it is preferable to use the compounds represented by the formula (I) or (II). This is because a better low heat generating property and abrasion resistance can be attained.

(Compound having an HSP of 27 or more)

The rubber composition for a tire according to the present disclosure comprises, in addition to the above-mentioned rubber component, carbon black, silica and carbon black dispersant, further a compound having a Hansen solubility parameter (HSP) of 27 or more.
The compound having an HSP of 27 or more has a high polarity and is adsorbed on the surface of the silica with precedence over the above-mentioned carbon black dispersant to resultantly have the effect as a shielding agent to cover the surface of the silica, and can suppress the carbon black being adsorbed on the silica surface. Consequently, since the dispersibility of the carbon black by the carbon black dispersant can be enhanced more, the low heat generating property and abrasion resistance of the rubber composition can be improved more than in conventional technologies.
Here, the Hansen solubility parameter (HSP) is a parameter to indicate a solubility of a substance. In the present disclosure, the value of HSP is determined as a value calculated by the method described in Charles M. Hansen, Hansen Solubility Parameter: A user's handbook, Second Edition (2007).
The HSP needs to be set at 27 or more, and when the HSP is less than 27, since the effect of shielding the surface of the silica is lowered, it becomes easy for a part of the carbon black dispersant to be adsorbed on the surface of the silica and a sufficient low heat generating property and abrasion resistance cannot be provided.
For the same reason, it is preferable that the HSP of the compound be 29 or more.
The compound is not particularly limited as long as having an HSP of 27 or more. For example, from the viewpoint of providing a better low heat generating property and abrasion resistance, it is preferable that the compound contain a fatty acid having 9 or more carbon atoms and contain at least one atom selected from nitrogen and oxygen. From the same viewpoint, it is more preferable that the compound contain a fatty acid having 9 or more carbon atoms and contain at least one group selected from OH, NRR' and C(=O)-OR. Here, R and R' are each hydrogen, carbon, a hydrocarbon or an alcohol, and may be the same or different. The upper limit of the numbers of carbon atoms of and R' are not particularly limited, but are preferably 30 or less and more preferably 25 or less. The numbers of carbon atoms of R and R' are not particularly limited, but are desirably 1 to 10.
Further it is particularly preferable, from the viewpoint of providing a better low heat generating property and abrasion resistance, that the compound having an HSP of 27 or more be at least one selected from $R^{100}$-N-RR', $R^{100}$-C(=O)-OR and $R^{100}$-C(=O)-N-RR'. Here, $R^{100}$ is a hydrocarbon group having 9 or more carbon atoms. R and R' are each hydrogen, carbon, a hydrocarbon or an alcohol, and may be the same or different. The upper limit of the number of carbon atoms of $R^{100}$ is not particularly limited, but is preferably 30 or less and more preferably 25 or less. The numbers of carbon atoms of R and R' are not particularly limited, but are desirably 1 to 10.
Examples of these compounds include glycerose monostearate, glycerol monostearate, polyoxyethylene stearylamine, stearic acid monoethanolamide, polyoxyethylene stearic acid amide, polyoxyethylene laurylamine and lauric acid amide.
Here, the compounds having an HSP of 27 or more can be used singly or as a mixture of two or more.
Then the content of the compound having an HSP of 27 or more is, from the viewpoint of providing a better low heat generating property and abrasion resistance, with respect to 100 parts by mass of the rubber component, preferably 3 to 30 parts by mass and more preferably 5 to 20 parts by mass.
When the content of the compound having an HSP of 27 or more is 3 parts by mass or more with respect to 100 parts by mass of the rubber component, the effect of shielding the surface of the silica is sufficiently attained and a better low heat generating property is provided. On the other hand, when the content of the compound is 20 parts by mass or less with respect to 100 parts by mass of the rubber component, a sufficient abrasion resistance can be secured.

(Other components)

The rubber composition for a tire according to the present disclosure, in addition to the above-mentioned rubber component, carbon black, silica, carbon black dispersant and compound having an HSP of 27 or more, can further comprise compounding ingredients usually used in the rubber industry, for example, a vulcanizing agent, a vulcanization accelerator, a softener, a silane coupling agent, an age resistor and a zinc oxide, through suitable selection in the range of not impairing the object of the present disclosure. As these compounding ingredients, commercially available products can suitably be used.

The vulcanizing agent to be used can be a conventionally known one, and is not particularly limited, but in the present disclosure, sulfur can suitably be used. The content thereof is, with respect to 100 parts by mass of the rubber component, usually 0.6 to 2.5 parts by mass and particularly preferably 1.0 to 2.3 parts by mass. By setting the amount of the vulcanizing agent to be compounded at 0.6 part by mass or more, a vulcanizing effect is sufficiently attained; and on the other hand, by setting at 2.5 parts by mass or less, there is no risk of bringing about reduction of the rubber strength and the like.

The vulcanization accelerator to be used can be a conventionally known one, and is not particularly limited, but examples thereof include sulfenamide-based vulcanization accelerators such as CBS (N-cyclohexyl-2-benzothiazyl sulfenamide), TBBS (N-t-butyl-2-benzothiazyl sulfenamide) and TBSI (N-t-butyl-2-benzothiazyl sulfenimide); guanidine-based vulcanization accelerators such as DPG (diphenyl guanidine); thiuram-based vulcanization accelerators such as tetraoctylthiuram disulfides, tetrabenzylthiuram disulfides; and zinc dialkyldithiophosphates. The amount thereof to be compounded is about 0.5 to 3 parts by mass parts with respect to 100 parts by mass of the rubber component.

The softener to be used can be a conventionally known one, and is not particularly limited, but includes petroleum softeners such as aroma oil, paraffin oil and naphthene oil, and vegetable softeners such as palm oil, castor oil, cottonseed oil and soybean oil. When these are used, these may be suitably selected and used singly or in two or more. In the case of compounding the softener, from the viewpoint of easiness of handleability, among the above-mentioned softeners, it is preferable to compound a softener liquid at room temperature such as 25°C, for example, a petroleum softener such as aroma oil, paraffin oil or naphthene oil, and it is preferable to compound no vegetable softener.

Further in the case of compounding a softener, the softener is compounded, with respect to 100 parts by mass of the rubber component, preferably in an amount of 10 parts by mass or less and more preferably in 5 parts by mass or less.

Since the rubber composition for a tire according to the present disclosure contains silica, it is preferable that the rubber composition further contain a silane coupling agent. This is because the effects of reinforceability and the low heat generating property can be more improved by the silica. Here, the silane coupling agent to be suitably used can be a known one. The content of the silane coupling agent is, though depending on the kind and the like of the silane coupling agent, with respect to the silica, preferably in the range of 2 to 25% by mass, more preferably in the range of 2 to 20% by mass and particularly preferably in the range of 5 to 18% by mass. When the content is 2% by mass or more, the effect as a coupling agent is sufficiently exhibited; and when 25% by mass or less, there is no risk of causing gelation of the rubber component.

A production method of the rubber composition for a tire according to the present disclosure is not particularly limited. The rubber composition can be obtained, for example, by compounding and kneading the above-mentioned rubber component, carbon black, silica, carbon black dispersant, compound having an HSP of 27 or more and other components, by a known method.

(Tire)

The tire according to the present disclosure is made by using the above-mentioned rubber composition for a tire according to the present disclosure. By incorporating the rubber composition for a tire according to the present disclosure as a tire material, an excellent low heat generating property and abrasion resistance can be achieved.

With regard to parts of a tire to which the rubber composition is applied, among parts of the tire, use thereof for the tread is preferable. The tire using the rubber composition for a tire according to the present disclosure for the tread is excellent in the low heat generating property and abrasion resistance.

Then the tire according to the present disclosure is not particularly limited as long as using the rubber composition for a tire according to the present disclosure for any of tire members, and can be produced by a common method. As a gas to be charged in the tire, the usual air and an air whose oxygen partial pressure has been regulated can be used, and besides, an inert gas such as nitrogen, argon or helium can be used.

EXAMPLES

Hereinafter, the present disclosure will be described in more detail by way of Examples, but the present disclosure is not any more limited to the following Examples.

(Examples 1 to 7, Comparative Examples 1 to 5)

Rubber compositions of the Examples and the Comparative Examples were prepared with the formulations indicated in Table 1.

The prepared samples of the rubber compositions were each evaluated for the low heat generating property and the abrasion resistance by the following methods. The evaluation results are presented in Table 1.

(1) Tanδ (low heat generating property)

The rubber composition of each sample was vulcanized at 145°C for 33 min to thereby obtain a vulcanized rubber. For the obtained vulcanized rubber, the loss tangent (tanδ) was measured at a temperature of 50°C, a strain of 5% and a frequency of 15 Hz by using a viscoelasticity meter (manufactured by Rheometric Scientific Inc.).

Here, the tanδ was indicated as an index with a value of Comparative Example 1 being taken to be 100; and a lower value thereof indicated being better in the low heat generating property.

(2) Abrasion test (abrasion resistance)

A test piece disc (16.2 mm in diameter × 6 mm in thickness) cut out of each prepared vulcanized rubber was subjected to a DIN abrasion test according to JIS K6264-2:2005 and the abrasion amount ($mm^3$) when the DIN abrasion test was carried out at room temperature was measured.

Here, with regard to the measured abrasion amount of each sample, the reciprocal number of the abrasion amount of each sample was indicated as an index with the reciprocal number of the abrasion amount of Comparative Example 1 being taken to be 100. A higher value of the index indicated a smaller abrasion amount and a better abrasion resistance.

[Table 1]

| | | Example | | | | | | | Comparative Example | | | | |
|---|---|---|---|---|---|---|---|---|---|---|---|---|---|
| | | 1 | 2 | 3 | 4 | 5 | 6 | 7 | 1 | 2 | 3 | 4 | 5 |
| Formulation (parts by mass) | Natural rubber*1 | 100 | 100 | 100 | 100 | 100 | 100 | 100 | 100 | 100 | 100 | 100 | 100 |
| | Carbon black N220*2 | 50 | 50 | 50 | 50 | 50 | 50 | 50 | 50 | 50 | 50 | 50 | 50 |
| | Silica*3 | 10 | 10 | 10 | 10 | 10 | 10 | 10 | 10 | 10 | 10 | 10 | 10 |
| | Silane coupling agent*4 | 1.0 | 1.0 | 1.0 | 1.0 | 1.0 | 1.0 | 1.0 | 1.0 | 1.0 | 1.0 | 1.0 | 1.0 |
| | Carbon black dispersant a*9 | 1.0 | 5.0 | - | - | - | - | 1.0 | - | - | 1.0 | 1.0 | 1.0 |
| | Carbon black dispersant b*10 | - | - | 1.0 | - | - | - | - | - | - | - | - | - |
| | Carbon black dispersant c*11 | - | - | - | 1.0 | - | - | - | - | - | - | - | - |
| | Carbon black dispersant d*12 | - | - | - | - | 1.0 | - | - | - | - | - | - | - |
| | Carbon black dispersant e*13 | - | - | - | - | - | 1.0 | - | - | - | - | - | - |
| | Glycerol monostearate*14 | 0.1 | 0.1 | 0.1 | 0.1 | 0.1 | 0.1 | - | - | 0.1 | - | - | - |
| | Lauric acid amide*15 | - | - | - | - | - | - | 0.1 | - | - | - | - | - |
| | Maleic acid monoester*16 | - | - | - | - | - | - | - | - | - | - | 0.1 | - |
| | Dimethylstearylamine*17 | - | - | - | - | - | - | - | - | - | - | - | 0.1 |
| | Process oil*5 | 2.0 | 2.0 | 2.0 | 2.0 | 2.0 | 2.0 | 2.0 | 2.0 | 2.0 | 2.0 | 2.0 | 2.0 |
| | Stearic acid | 2.0 | 2.0 | 2.0 | 2.0 | 2.0 | 2.0 | 2.0 | 2.0 | 2.0 | 2.0 | 2.0 | 2.0 |
| | Age resistor 6PPD*6 | 1.0 | 1.0 | 1.0 | 1.0 | 1.0 | 1.0 | 1.0 | 1.0 | 1.0 | 1.0 | 1.0 | 1.0 |
| | Age resistor TMQ*7 | 1.0 | 1.0 | 1.0 | 1.0 | 1.0 | 1.0 | 1.0 | 1.0 | 1.0 | 1.0 | 1.0 | 1.0 |
| | Zinc white | 3.0 | 3.0 | 3.0 | 3.0 | 3.0 | 3.0 | 3.0 | 3.0 | 3.0 | 3.0 | 3.0 | 3.0 |
| | Vulcanization accelerator CBS*8 | 0.8 | 0.8 | 0.8 | 0.8 | 0.8 | 0.8 | 0.8 | 0.8 | 0.8 | 0.8 | 0.8 | 0.8 |
| | Sulfur | 1.5 | 1.5 | 1.5 | 1.5 | 1.5 | 1.5 | 1.5 | 1.5 | 1.5 | 1.5 | 1.5 | 1.5 |
| Evaluation | Tanδ index (low heat generating property) | 80 | 82 | 70 | 85 | 85 | 85 | 80 | 100 | 97 | 98 | 90 | 93 |
| | Abrasion index (abrasion resistance) | 111 | 105 | 120 | 105 | 105 | 105 | 111 | 100 | 100 | 100 | 105 | 103 |

*1: RSS#1

*2: "#80", manufactured by Asahi Carbon Co., Ltd.

*3: "Nipsil AQ", manufactured by Tosoh Silica Corp.

*4: bis(3-triethoxysilylpropyl) disulfide, manufactured by Evonik Degussa GmbH, trade name: "Si75®"(Si75 is a registered trademark in Japan, other countries, or both)

*5: "A/O MIX", manufactured by Sankyo Yuka Kogyo K.K.

*6: 2,2,2-trimethyl-1,2-dihydroquinoline polymer, manufactured by

Ouchi Shinko Chemical Industrial Co., Ltd., "Nocrac 224"

*7: N-tert-butyl-2-benzothiazolyl sulfenamide, manufactured by Sanshin Chemical Industry Co., Ltd., "Sanceler NS"

*8: N-cyclohexyl-2-benzothiazole sulfenamide, manufactured by Sanshin Chemical Industry Co., Ltd., "Sanceler CM"

*9: hydrazide 3-hydroxy-2-naphthoate, manufactured by Tokyo Chemical Industry Co., Ltd.

*10: 2,6-dihydroxybenzohydrazide, manufactured by Otsuka Chemical Co., Ltd.

*11: S-(2-(benzimidazolyl-2)ethyl)thiosulfuric acid, manufactured by Shikoku Chemicals Corp.

*12: sodium (2Z)-4-[(4-aminophenyl)amino]-4-oxo-2-butenoate, manufactured by Sumitomo Chemical Co., Ltd., "Sumilink 200"

*13: S-(3-aminopropyl)thiosulfuric acid, manufactured by Sumitomo Chemical Co., Ltd., "Sumilink 100"

*14: "Excel S-95", manufactured by Kao Corp., HSP value: 35.6

*15: "Diamide Y", manufactured by Nippon Kasei Chemical Co., Ltd., HSP value: 29.2

*16: mono[POP(5) lauryl ether] maleate, HSP value: 26.2

*17: "Farmin DM8098", manufactured by Kao Corp., HSP value: 21.7

From the results of Table 1, it has been found that any of the rubber compositions of the Examples exhibited a good low heat generating property and abrasion resistance.

INDUSTRIAL APPLICABILITY

According to the present disclosure, a rubber composition for a tire excellent in the low heat generating property and abrasion resistance can be provided. According to the present disclosure, a tire excellent in the low heat generating property and abrasion resistance can further be provided.

## Claims

1. A rubber composition for a tire comprising: a rubber component containing a diene rubber; a carbon black; and a silica, wherein the rubber composition further comprises: a carbon black dispersant which is at least one selected from the group consisting of compounds represented by the formulae (I) to (V), and salts, solvates and solvates of salts of compounds represented by the formula (IV); and a compound having a Hansen solubility parameter (HSP) of 27 or more:

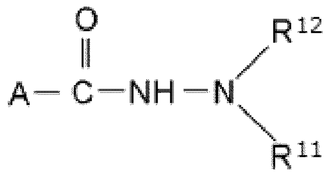 · · · (I)

wherein A is an aryl group, and the aryl group has at least one polar group, and when the aryl group has two or more polar groups, the polar groups may be the same or different; and $R^{11}$ and $R^{12}$ are each independently at least one substituent selected from the group consisting of a hydrogen atom, an acyl group, an amide group, an alkyl group, a cycloalkyl group and an aryl group, and the substituent may contain one or more of oxygen, sulfur and nitrogen atoms;

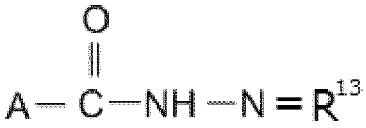 · · · (II)

wherein A is an aryl group, the aryl group has at least one polar group, and when the aryl group has two or more polar groups, the polar groups may be the same or different; and $R^{13}$ is a substituent composed of an alkylene group, a cycloalkylene group or an arylene group, and the substituent may contain one or more of oxygen, sulfur and nitrogen atoms;

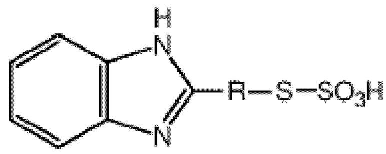 · · · (III)

wherein R denotes a linear or branched alkylene group having 1 to 6 carbon atoms;

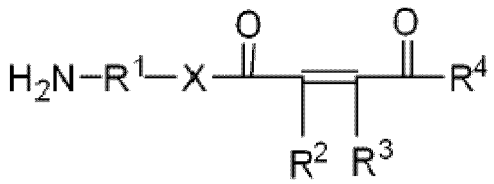 · · · (IV)

wherein $R^1$ denotes an alkanediyl group having 2 to 12 carbon atoms which may have a substituent, a cycloalkanediyl group having 3 to 12 carbon atoms which may have a substituent, or a $*-B^1-Ar-B^2-*$ group where * denotes a bond, $B^1$ and $B^2$ denote a single bond or an alkanediyl group having 1 to 12 carbon atoms, and Ar denotes a divalent aromatic hydrocarbon group having 6 to 12 carbon atoms which may have a substituent; $R^2$ and $R^3$ each independently denote a hydrogen atom, a halogen atom, an alkyl group having 1 to 6 carbon atoms, an aryl group having 6 to 12 carbon atoms, a hydroxy group or an alkoxy group having 1 to 6 carbon atoms, or are bonded to each other to form an alkanediyl group having 2 to 12 carbon atoms; $R^4$ denotes a hydroxy group, an alkoxy group having 1 to 6 carbon atoms, an aryloxy group having 6 to 12 carbon atoms, an arylalkoxy group having 7 to 15 carbon atoms, $-NR^5R^6$ where $R^5$ and $R^6$ each independently denote a hydrogen atom or an alkyl group having 1 to 6 carbon atoms, or $-O^-(Y^{n+})^{1in}$; and X denotes -NH- or -O-; and

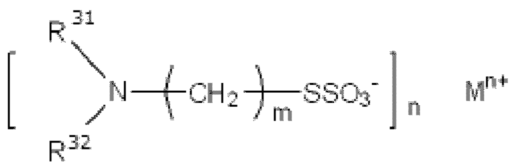 · · · (V)

wherein $M^{n+}$ denotes $H^+$ or an n-valent metal ion where n denotes an integer of 1 or 2; $R^{31}$ and $R^{32}$ each independently

denote a hydrogen atom or an alkyl group having 1 to 6 carbon atoms, or are bonded to each other to form a ring with the nitrogen atom to which $R^{31}$ and $R^{32}$ are bonded; and m denotes an integer of 2 to 9.

**2.** The rubber composition for a tire according to claim 1, comprising the carbon black dispersant in an amount of 0.05 to 30 parts by mass with respect to 100 parts by mass of the rubber component.

**3.** The rubber composition for a tire according to claim 1 or 2, comprising the compound having an HSP of 27 or more in an amount of 3 to 30% by mass with respect to a content of the silica.

**4.** The rubber composition for a tire according to any one of claims 1 to 3, wherein the rubber component contains a natural rubber in an amount of 60% by mass or more.

**5.** The rubber composition for a tire according to any one of claims 1 to 4, comprising the carbon black in an amount of 10 to 160 parts by mass with respect to 100 parts by mass of the rubber component.

**6.** The rubber composition for a tire according to claim 5, wherein the following relational expression is satisfied:

$$0.05 < b/(a + b) < 0.9$$

where a represents a content of the carbon black and b represents a content of the silica in the rubber composition.

**7.** The rubber composition for a tire according to any one of claims 1 to 6, wherein the compound having an HSP of 27 or more comprises a fatty acid having 9 or more carbon atoms, and at least one atom selected from nitrogen and oxygen.

**8.** A tire made using the rubber composition for a tire according to any one of claims 1 to 7.

## Patentansprüche

**1.** Kautschukzusammensetzung für einen Reifen, umfassend: eine Kautschukkomponente, die einen Dienkautschuk enthält; einen Ruß; und ein Siliciumdioxid,
wobei die Kautschukzusammensetzung ferner Folgendes umfasst: ein Rußdispergiermittel, das mindestens eines ist ausgewählt aus der Gruppe bestehend aus Verbindungen, die durch die Formeln (I) bis (V) dargestellt sind, und Salzen, Solvaten und Solvaten von Salzen von Verbindungen, die durch die Formel (IV) dargestellt sind; und einer Verbindung, die einen Hansen-Löslichkeitsparameter (HSP) von 27 oder mehr aufweist:

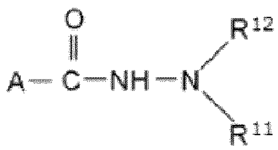 · · · (I)

wobei A eine Arylgruppe ist und die Arylgruppe mindestens eine polare Gruppe aufweist und wenn die Arylgruppe zwei oder mehr polare Gruppen aufweist, die polaren Gruppen gleich oder verschieden sein können; und $R^{11}$ und $R^{12}$ jedes unabhängig mindestens ein Substituent sind ausgewählt aus der Gruppe bestehend aus einem Wasserstoffatom, einer Acylgruppe, einer Amidgruppe, einer Alkylgruppe, einer Cycloalkylgruppe und einer Arylgruppe und der Substituent eines oder mehrere von Sauerstoff-, Schwefel- und Stickstoffatomen enthalten kann;

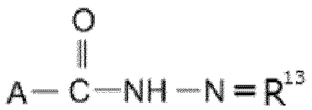 · · · (II)

wobei A eine Arylgruppe ist, die Arylgruppe mindestens eine polare Gruppe aufweist und wenn die Arylgruppe zwei oder mehr polare Gruppen aufweist, die polaren Gruppen gleich oder verschieden sein können; und $R^{13}$ ein Substituent ist, der aus einer Alkylengruppe, einer Cycloalkylengruppe oder einer Arylengruppe besteht und der Substituent eines oder mehrere von Sauerstoff-, Schwefel- und Stickstoffatomen enthalten kann;

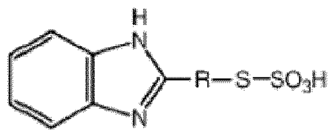

· · · (III)

wobei R eine lineare oder verzweigte Alkylengruppe bedeutet, die 1 bis 6 Kohlenstoffatome aufweist;

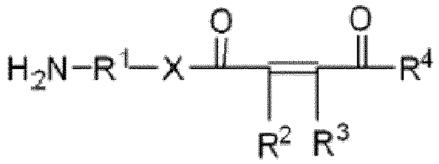

· · · (IV)

wobei $R^1$ eine Alkandiylgruppe, die 2 bis 12 Kohlenstoffatome aufweist, die einen Substituenten aufweisen kann, eine Cycloalkandiylgruppe, die 3 bis 12 Kohlenstoffatome aufweist, die einen Substituenten aufweisen kann, oder eine $*-B^1-Ar-B^2-*$-Gruppe bedeutet, wobei *eine Bindung bedeutet, $B^1$ und $B^2$ eine Einfachbindung oder eine Alkandiylgruppe, die 1 bis 12 Kohlenstoffatome aufweist, bedeuten und Ar eine zweiwertige aromatische Kohlenwasserstoffgruppe, die 6 bis 12 Kohlenstoffatome aufweist, die einen Substituenten aufweisen kann, bedeutet; $R^2$ und $R^3$ jedes unabhängig ein Wasserstoffatom, ein Halogenatom, eine Alkylgruppe, die 1 bis 6 Kohlenstoffatome aufweist, eine Arylgruppe, die 6 bis 12 Kohlenstoffatome aufweist, eine Hydroxygruppe oder eine Alkoxygruppe, die 1 bis 6 Kohlenstoffatome aufweist, bedeutet oder aneinandergebunden sind, um eine Alkandiylgruppe zu bilden, die 2 bis 12 Kohlenstoffatome aufweist; $R^4$ eine Hydroxygruppe, eine Alkoxygruppe, die 1 bis 6 Kohlenstoffatome aufweist, eine Aryloxygruppe, die 6 bis 12 Kohlenstoffatome aufweist, eine Arylalkoxygruppe, die 7 bis 15 Kohlenstoffatome aufweist, $-NR^5R^6$ bedeutet, wobei $R^5$ und $R^6$ jedes unabhängig ein Wasserstoffatom oder eine Alkylgruppe, die 1 bis 6 Kohlenstoffatome aufweist, oder $-O^-(Y^{n+})^{1/n}$ bedeutet;
und X -NH- oder -O- bedeutet; und

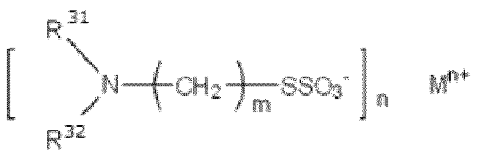

· · · (V)

wobei $M^{n+}$ $H^+$ oder ein n-wertiges Metallionen bedeutet, wobei n eine ganze Zahl von 1 oder 2 bedeutet; $R^{31}$ und $R^{32}$ jedes unabhängig ein Wasserstoffatom oder eine Alkylgruppe, die 1 bis 6 Kohlenstoffatome aufweist, bedeuten oder aneinandergebunden sind, um einen Ring mit dem Stickstoffatom zu bilden, an das $R^{31}$ und $R^{32}$ gebunden sind; und m eine ganze Zahl von 2 bis 9 bedeutet.

2. Kautschukzusammensetzung für einen Reifen nach Anspruch 1, umfassend das Rußdispergiermittel in einer Menge von 0,05 bis 30 Masseteilen mit Bezug auf 100 Masseteile der Kautschukkomponente.

3. Kautschukzusammensetzung für einen Reifen nach Anspruch 1 oder 2, umfassend die Verbindung, die einen HSP von 27 oder mehr aufweist, in einer Menge von 3 bis 30 Masse-% mit Bezug auf einen Gehalt des Siliciumdioxids.

4. Kautschukzusammensetzung für einen Reifen nach einem der Ansprüche 1 bis 3, wobei die Kautschukkomponente einen Naturkautschuk in einer Menge von 60 Masse-% oder mehr enthält.

5. Kautschukzusammensetzung für einen Reifen nach einem der Ansprüche 1 bis 4, umfassend den Ruß in einer Menge von 10 bis 160 Masseteilen mit Bezug auf 100 Masseteile der Kautschukkomponente.

6. Kautschukzusammensetzung für einen Reifen nach Anspruch 5, wobei der folgende Vergleichsausdruck erfüllt ist:

$$0{,}05 < b/(a + b) < 0{,}9$$

wobei a einen Gehalt des Rußes bedeutet und b einen Gehalt des Siliciumdioxids in der Kautschukzusammensetzung bedeutet.

7. Kautschukzusammensetzung für einen Reifen nach einem der Ansprüche 1 bis 6, wobei die Verbindung, die einen HSP von 27 oder mehr aufweist, eine Fettsäure, die 9 oder mehr Kohlenstoffatome aufweist, und mindestens ein Atom ausgewählt unter Stickstoff und Sauerstoff umfasst.

8. Reifen, der unter Verwendung der Kautschukzusammensetzung für einen Reifen nach einem der Ansprüche 1 bis 7 hergestellt wird.

## Revendications

1. Composition de caoutchouc pour un bandage pneumatique comprenant: un composant de caoutchouc contenant un caoutchouc diène; un noir de carbone; et une silice,
la composition de caoutchouc comprenant en outre: un dispersant de noir de carbone qui est au moins l'un sélectionné dans le groupe constitué des composés représentés par les formules (I) à (V), et des sels, solvates et solvates de sels des composés représentés par la formule (IV); et un composé ayant un paramètre de solubilité de Hansen (HSP) de 27 ou plus:

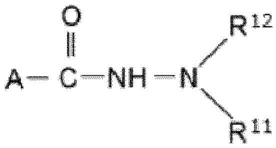 · · · (I)

A étant un groupe aryle, et le groupe aryle ayant au moins un groupe polaire, et lorsque le groupe aryle possède deux groupes polaires ou plus, les groupes polaires peuvent être identiques ou différents; et $R^{11}$ et $R^{12}$ sont chacun indépendamment au moins un substituant sélectionné dans le groupe constitué d'un atome d'hydrogène, d'un groupe acyle, d'un groupe amide, d'un groupe alkyle, d'un groupe cycloalkyle et d'un groupe aryle, et le substituant pouvant contenir un ou plusieurs atomes d'oxygène, de soufre et d'azote;

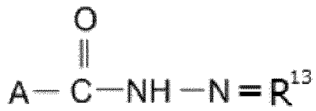 · · · (II)

A étant un groupe aryle, le groupe aryle ayant au moins un groupe polaire, et lorsque le groupe aryle possède deux groupes polaires ou plus, les groupes polaires peuvent être identiques ou différents; et $R^{13}$ est un substituant composé d'un groupe alcylène, d'un groupe cycloalcylène ou d'un groupe arylène, et le substituant pouvant contenir un ou plusieurs atomes d'oxygène, de soufre et d'azote;

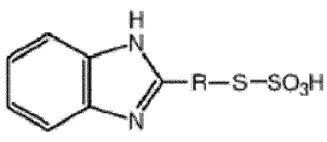 · · · (III)

R indiquant un groupe alcylène linéaire ou ramifié ayant de 1 à 6 atomes de carbone;

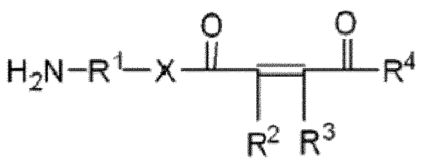 · · · (IV)

$R^1$ indiquant un groupe alcanediyle ayant de 2 à 12 atomes de carbone qui peut avoir un substituant, un groupe cycloalcanediyle ayant de 3 à 12 atomes de carbone qui peut avoir un substituant, ou un groupe $*-B^1-Ar-B^2-*$ où *

indique une liaison, $B^1$ et $B^2$ indiquent une simple liaison ou un groupe alcanediyle ayant de 1 à 12 atomes de carbone, et Ar indique un groupe hydrocarbure aromatique divalent ayant de 6 à 12 atomes de carbone qui peut avoir un substituant; $R^2$ et $R^3$ indiquent chacun indépendamment un atome d'hydrogène, un atome d'halogène, un groupe alkyle ayant de 1 à 6 atomes de carbone, un groupe aryle ayant de 6 à 12 atomes de carbone, un groupe hydroxyle ou un groupe alcoxy ayant de 1 à 6 atomes de carbone, ou sont liés l'un à l'autre pour former un groupe alcanediyle ayant de 2 à 12 atomes de carbone; $R^4$ indique un groupe hydroxyle, un groupe alcoxy ayant de 1 à 6 atomes de carbone, un groupe aryloxy ayant de 6 à 12 atomes de carbone, un groupe arylalcoxy ayant de 7 à 15 atomes de carbone, $-NR^5R^6$ où $R^5$ et $R^6$ indiquent chacun indépendamment un atome d'hydrogène ou un groupe alkyle ayant de 1 à 6 atomes de carbone, ou $-O^-(Y^{n+})^{1/n}$;
et X indique -NH- ou -O-; et

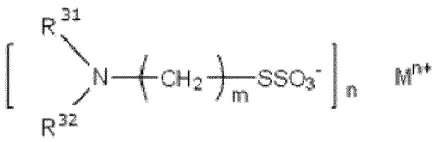 · · · (V)

$M^{n+}$ indique $H^+$ ou un ion de métal n-valent où n indique un nombre entier d'une valeur de 1 ou 2; $R^{31}$ et $R^{32}$ indiquent chacun indépendamment un atome d'hydrogène ou un groupe alkyle ayant de 1 à 6 atomes de carbone, ou sont liés l'un à l'autre pour former un cycle avec l'atome d'azote auquel $R^{31}$ et $R^{32}$ sont liés; et m indique un nombre entier d'une valeur de 2 à 9.

2. Composition de caoutchouc pour un bandage pneumatique selon la revendication 1, comprenant le dispersant de noir de carbone en une quantité de 0,05 à 30 parties en masse par rapport à 100 parties en masse du composant de caoutchouc.

3. Composition de caoutchouc pour un bandage pneumatique selon la revendication 1 ou 2, comprenant le composé ayant un HSP de 27 ou plus en une quantité de 3 à 30 % en masse par rapport à une teneur de la silice.

4. Composition de caoutchouc pour un bandage pneumatique selon l'une quelconque des revendications 1 à 3, le composant de caoutchouc contenant un caoutchouc d'origine naturelle en une quantité de 60 % en masse ou plus.

5. Composition de caoutchouc pour un bandage pneumatique selon l'une quelconque des revendications 1 à 4, comprenant le noir de carbone en une quantité de 10 à 160 parties en masse par rapport à 100 parties en masse du composant de caoutchouc.

6. Composition de caoutchouc pour un bandage pneumatique selon la revendication 5, l'expression relationnelle suivante étant satisfaite:

$$0,05 < b/(a + b) < 0,9$$

où a représente une teneur du noir de carbone et b représente une teneur de la silice dans la composition de caoutchouc.

7. Composition de caoutchouc pour un bandage pneumatique selon l'une quelconque des revendications 1 à 6, le composé ayant un HSP de 27 ou plus comprenant un acide gras ayant 9 atomes de carbone ou plus, et au moins un atome sélectionné parmi l'azote et l'oxygène.

8. Bandage pneumatique fabriqué en utilisant la composition de caoutchouc pour un bandage pneumatique selon l'une quelconque des revendications 1 à 7.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2014501827 A


### Non-patent literature cited in the description


- **CHARLES M. HANSEN.** Hansen Solubility Parameter: A user's handbook. 2007